# EUROPÄISCHE PATENTSCHRIFT

(11) **EP 1 577 134 B1**
(45) Veröffentlichungstag und Bekanntmachung des Hinweises auf die Patenterteilung: **20.04.2011**
(21) Anmeldenummer: 05002071.8
(22) Anmeldetag: 02.02.2005
(51) Int. Cl.: B60J 5/06, B60R 16/02

(54) **Schiebetür oder Schwenkschiebetür für Fahrzeuge des öffentlichen Personennah- und -fernferkehrs**
Sliding door or swinging-sliding door for vehicles of the urban and long distance pasenger traffic
Porte coulissante or pivotante-coulissante pour vehicules du transport urbain et à grande distance de personnes

(30) Priorität: 25.02.2004 DE 202004002907 U
(43) Veröffentlichungstag der Anmeldung: 21.09.2005
(73) Patentinhaber: Gebr. Bode GmbH & Co. KG, 34123 Kassel (DE)
(72) Erfinder: Arend, Ulrich, 34576 Homberg-Dickershausen (DE)
(74) Vertreter: Bauer Vorberg Kayser Patentanwälte

(56) Entgegenhaltungen:
- EP-A- 0 225 855
- EP-A- 1 314 626
- DE-U1- 8 226 126
- GB-A- 652 710
- GB-A- 814 297
- US-B1- 6 446 389

## Beschreibung

Die Erfindung betrifft eine Schiebetür oder Schwenkschiebetür für Fahrzeuge des öffentlichen Personennah- und -fernverkehrs mit den Merkmalen aus dem Oberbegriff des Patentanspruchs 1.

Schwenkschiebetüren dieser Bauart sind grundsätzlich bekannt.

Bei der Montage von Schwenkschiebetüren in dem Türportal eines Fahrzeugs tritt das Problem auf, dass die im oberen Bereich des Türportals angeordnete Antriebseinrichtung in Höhe und Winkelstellung sehr genau justiert werden muss, damit das Öffnen und Schließen der Schwenkschiebetür einwandfrei funktioniert.

Der Erfindung liegt die Aufgabe zugrunde, eine Schiebetür oder Schwenkschiebetür mit den im Oberbegriff des Patentanspruchs 1 angegebenen Merkmalen zu schaffen, bei der die Montage und Justierung der Antriebseinrichtung rasch und präzise mit einfachen Mitteln durchführbar ist.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, die Antriebseinrichtung über Befestigungsvorrichtungen im Türportal aufzuhängen, welche eine einfach und rasche Justierung ermöglichen. Bei einer besonders vorteilhaften und in den Patentansprüchen 2 und folgenden beschriebenen Ausführungsform der erfindungsgemäßen Schiebetür oder Schwenkschiebetür erfolgt die Befestigung der Antriebseinrichtung über mehrere Befestigungsvorrichtungen, von denen jede zwei Halterungsplatten besitzt, wobei eine erste Halterungsplatte mit dem Türrahmen und eine zweite Halterungsplatte mit einem Element der Antriebseinrichtung verbunden ist. Die beiden Halterungsplatten, die im wesentlichen parallel zueinander in vertikalen Ebenen liegen, können über drei Gewindebolzen miteinander verbunden sein, von denen zwei horizontal verlaufen und einer vertikal ausgerichtet ist. Die beiden Halterungsplatten sind derart ausgebildet und die Gewindebolzen so angeordnet, dass Verschiebungs- und Schwenkbewegungen zwischen den beiden Halterungsplatten und dadurch eine Justierung der gesamten Antriebseinrichtung in der Höhe und in der Winkelstellung möglich sind.

Im folgenden wird anhand der beigefügten Zeichnungen ein Ausführungsbeispiel für eine Schwenkschiebetür nach der Erfindung näher erläutert.

In den Zeichnungen zeigen:
- Fig. 1: in einer aus dem Fahrzeuginneren gesehenen Gesamtansicht eine zweiflügelige Schwenkschiebetür in einer in der Höhe verkürzten Darstellung;
- Fig. 2: einen Schnitt nach der Linie D-D in Fig. 3 in vergrößerter Darstellung;
- Fig. 3: in gegenüber Fig. 1 vergrößerter Darstellung die Antriebseinrichtung der Schwenkschiebetür nach Fig. 1.

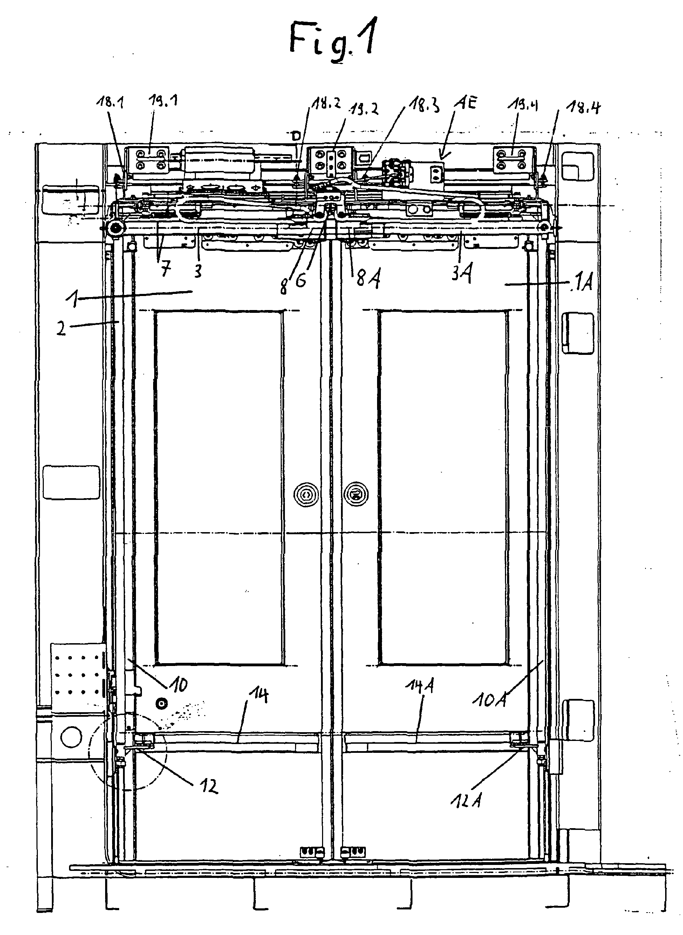

Die in den Fig. 1 bis 3 dargestellte Schwenkschiebetür besitzt zwei gegeneinander bewegbare Türblätter 1 und 1A, die innerhalb eines Türportals 2 angeordnet sind. Im folgenden werden die einander entsprechenden Einzelteile, die jeweils einem der beiden Türblätter 1 und 1A zugeordnet sind, mit den gleichen Bezugsziffern bezeichnet, wobei der Bezugsziffer des einen Türblatts beim zweiten Türblatt ein A hinzugefügt wird.

Das Türblatt 1 ist in nicht dargestellter Weise über ein Parallelogrammgestänge mit einem beispielsweise als Kugelhülse oder Rollenschlitten ausgebildeten Tragglied 8 verbunden, das auf einem Führungselement 3 läuft, das als Rundstange oder Führungsschiene ausgebildet sein kann und das fest mit dem Türportal 2 verbunden ist.

Beim Öffnen und Schließen der Tür bewegen sich die Türblätter 1 und 1A in Richtung der Führungselemente 3 und 3A in gegenläufiger Bewegung. Da es sich um eine Schwenkschiebetür handelt, ist die Längsbewegung des Türblatts 1 mit der Querbewegung durch eine mit dem Türportal 2 fest verbundene Führungsschiene 5 koordiniert, in welche ein mit dem Türblatt verbundenes, nicht dargestelltes Führungsmittel eingreift. Die Bewegung der Türblätter erfolgt durch einen Antriebsmotor 6, der als Elektromotor ausgebildet sein kann und dessen Abtriebskraft über einen umlaufenden Nockenriemen 7 auf die Türblätter übertragen wird.

Das Ausschwenken der Türblätter durch die Querbewegung wird unterstützt, indem die Reaktionskraft des Antriebsmotors 6 über ein Koppelelement 4 sowie ein als Schwenkhebel 4.1 ausgebildetes Übertragungselement und eine Koppelstange 15 sowie einen nicht dargestellten Schwenkhebel auf eine Drehsäule 10 übertragen wird, die in vertikaler Richtung drehbar am Türportal 2 gelagert ist. An der Drehsäule 10 ist ein nicht dargestellter oberer Rollenhebel und ein unterer Rollenhebel 12 angeordnet. Die Stützrolle des oberen Rollenhebels läuft in einer nicht dargestellten, an der Innenseite des Türblatts 1 angeordneten oberen Führungsschiene, während die Führungsrollen des unteren Rollenhebels 12 in einer am Türblatt angeordneten Führungsschiene 14 geführt sind.

Die gesamte im oberen Bereich des Türportals 2 angeordnete Antriebseinrichtung AE ist über Befestigungsvorrichtungen mit dem Türportal 2 verbunden. Diese Befestigungsvorrichtungen werden im folgenden näher beschrieben.

Jede Befestigungsvorrichtung 18.1, 18.2, 18.3 und 18.4 besitzt jeweils eine Befestigungsplatte 19.1, 19.2, und 19.4, die an einem mit dem Türportal 2 verbundenen Teil 2.1 des Fahrzeugs fest angeordnet ist und an der die weiteren Teile der Befestigungsvorrichtung angeordnet sind.

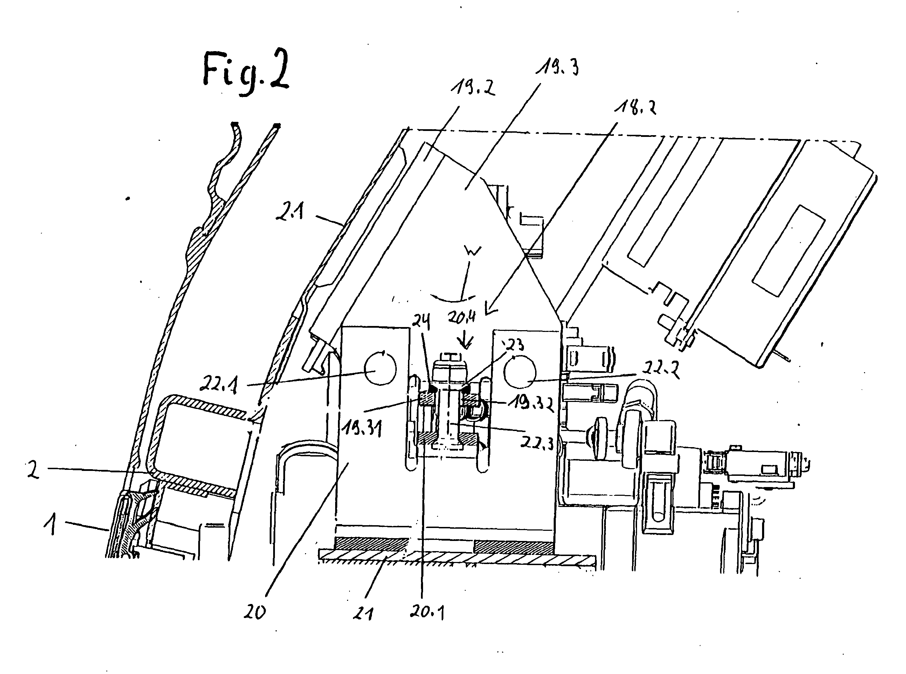

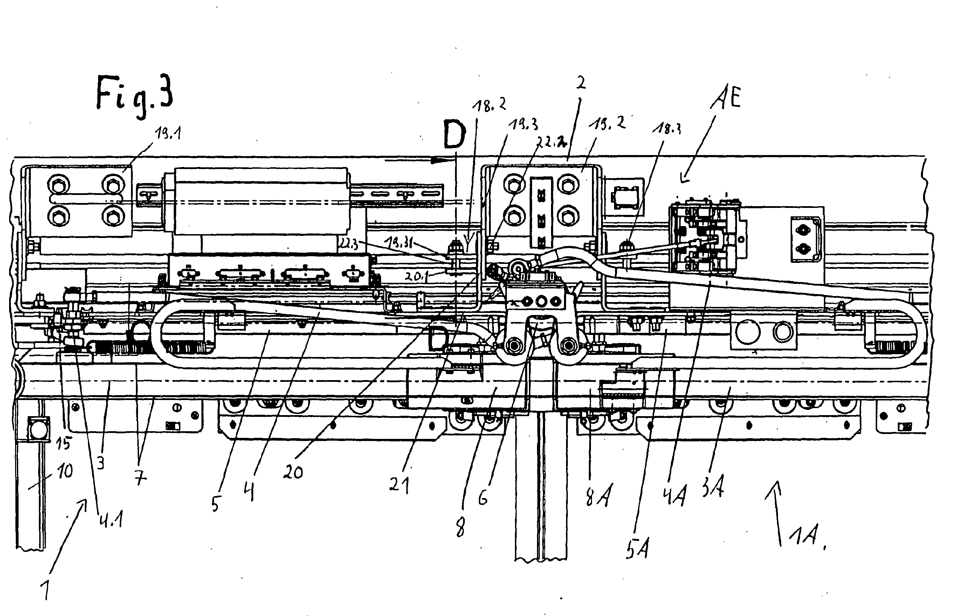

Da die in den Fig. 1 und 3 dargestellten Befestigungsvorrichtungen in gleicher Weise ausgebildet sind, erfolgt die weitere Beschreibung anhand der Befestigungsvorrichtung 18.2, die in Fig. 2 und Fig. 3 gut zu erkennen ist.

Die Befestigungsvorrichtung 18.2 besitzt eine an der Befestigungsplatte 19.2 in einer Ebene quer zum Türportal 2 liegende erste Halterungsplatte 19.3, an der eine mit einem Element 21 der Antriebseinrichtung AE fest verbundene und parallel zur ersten Halterungsplatte 19.3 liegende zweite Halterungsplatte 20 in vertikaler Richtung und bezüglich der Winkeleinstellung um eine horizontale Achse justierbar befestigt ist.

Hierzu dienen die nachfolgend aufgeführten Befestigungsmittel.

Zwei horizontal und senkrecht zur Ebene der ersten Halterungsplatte 19.3 liegende Gewindebolzen 22.1 und 22.2 durchgreifen die Halterungsplatten 19.3 und 20 in Durchtrittslöchern, die einen gegenüber den Gewindebolzen erweiterten Durchmesser aufweisen oder als Langlöcher ausgebildet sind. Durch einen dritten vertikal und parallel zur Ebene der ersten Halterungsplatte 19.3 liegenden Gewindebolzen 22.3 werden zwei im wesentlichen horizontal verlaufende und parallel zueinander übereinander angeordnete Befestigungsstücke 19.31 und 20.1 miteinander verbunden, von denen das erste Befestigungsstück 19.31 mit der Halterungsplatte 19.3 fest verbunden ist und die Halterungsplatte 20 in einer Ausnehmung 20.4 durchsetzt und von denen das zweite Befestigungsstück 20.1 an der von der Halterungsplatte 19.3. abgewandten Seite unterhalb der Ausnehmung 20.4 befestigt ist und unterhalb des ersten Befestigungsstücks 19.31 angeordnet ist. Die Durchgangsbohrung im ersten Befestigungsstück 19.31 zur Aufnahme des dritten Gewindebolzens 22.3 besitzt einen größeren Durchmesser als der dritte Gewindebolzen 22.3. An der Oberseite des ersten Befestigungsstücks 19.31 ist zwischen diesem und dem Kopf bzw. der Mutter des dritten Gewindebolzens 22.3 eine die Bohrung umgebende ringförmige, nach oben konkave Kugelpfanne 24 angeordnet, in die eine nach unten konvexe, den Gewindebolzen 22.3 umgebende ringförmige Kugelscheibe 23 eingreift. Zum Durchtritt des ersten und zweiten Gewindebolzens 22.1 und 22.2 durch die erste Halterungsplatte 19.3 sind in dieser in nicht dargestellter Weise auf einem gemeinsamen Kreisbogen W liegende bogenförmige Langlöcher angeordnet.

Es lässt sich aus den Zeichnungen leicht ablesen, dass mittels der dargestellten und beschriebenen Befestigungsvorrichtungen in Höhe und Winkelstellung durch entsprechende Bewegung der beiden Halterungsplatten 19.3 und 20 gegeneinander durchführbar ist.

## Patentansprüche

1. Schiebetür oder Schwenkschiebetür für Fahrzeuge des öffentlichen Personennah- und -fernverkehrs mit mindestens einem Türblatt und einer im oberen Bereich des Türportals angeordneten Antriebseinrichtung, die über Befestigungsvorrichtungen mit dem Türportal verbunden ist und ein Führungselement aufweist, auf dem das Türblatt in seiner Längsrichtung verschiebbar ist, sowie einen Antriebsmotor, dessen Abtriebskraft am Türblatt in Richtung des Führungselements angreift, **dadurch gekennzeichnet, dass** jede Befestigungsvorrichtung (18.1, 18.2, 18.3, 18.4) für die Antriebseinrichtung eine erste fest mit dem Türportal (2) verbundene und in einer Ebene quer zum Türportal liegende Halterungsplatte (19.3) aufweist, an der eine mit einem Element (21) der Antriebseinrichtung fest verbundene und parallel zur ersten Halterungsplatte (19.3) liegende zweite Halterungsplatte (20) in vertikaler Richtung und bezüglich der Winkeleinstellung um eine horizontale Achse justierbar befestigt ist.

2. Schiebetür oder Schwenkschiebetür nach Anspruch 1, **dadurch gekennzeichnet, dass** die Befestigung der zweiten Halterungsplatte (20) an der ersten Halterungsplatte (19.3) folgende Befestigungsmittel aufweist:
a) Zwei horizontal und senkrecht zur Ebene der ersten Halterungsplatte (19.3) liegende Gewindebolzen (22.1, 22.2), die jeweils mindestens eine der beiden Halterungsplatten (19.3, 20) in Durchtrittslöchern durchgreifen, die einen gegenüber dem Gewindebolzen erweiterten Durchmesser aufweisen oder als Langlöcher ausgeführt sind;
b) einen dritten vertikal und parallel zur Ebene der ersten Halterungsplatte (19.3) liegenden Gewindebolzen (22.3), durch welchen zwei im wesentlichen horizontal verlaufende und parallel zueinander übereinander angeordnete Befestigungsstücke (19.31, 20.1) miteinander verbunden sind, von denen ein erstes (19.31) mit der einen Halterungsplatte (19.3) fest verbunden ist und die andere Halterungsplatte (20) in einer Ausnehmung (20.4) durchsetzt, und ein zweites mit der jeweils anderen Halterungsplatte (20) fest verbunden ist.

3. Schiebetür oder Schwenkschiebetür nach Anspruch 2, **dadurch gekennzeichnet, dass** die Ausnehmung (20.4) in der zweiten Halterungsplatte (20) angeordnet ist und das erste Befestigungsstück (19.31) mit der ersten Halterungsplatte (19.3) verbunden und durch die Ausnehmung (20.4) in der zweiten Halterungsplatte (20) hindurchgeführt ist und das zweite Befestigungsstück (20.1) an der zweiten Halterungsplatte (20) an der von der ersten Halterungsplatte abgewandten Seite unterhalb der Ausnehmung (20.4) befestigt ist und unterhalb des ersten Befestigungsstückes (19.31) angeordnet ist.

4. Schiebetür oder Schwenkschiebetür nach Anspruch 3, **dadurch gekennzeichnet, dass** die Durchgangsbohrung im ersten Befestigungsstück (19.31) zur Aufnahme des dritten Gewindebolzens (22.3) einen größeren Durchmesser besitzt als der dritte Gewindebolzen (22.3).

5. Schiebetür oder Schwenkschiebetür nach Anspruch 4, **dadurch gekennzeichnet, dass** an der Oberseite des ersten Befestigungsstückes (19.31) zwischen diesem und dem Kopf bzw. der Mutter des dritten Gewindebolzens (22.3) eine die Bohrung umgebende ringförmige, nach oben konkave Kugelpfanne (24) angeordnet ist, in die eine nach unten konvexe, den Gewindebolzen (22.3) umgebende ringförmige Kugelscheibe (23) eingreift.

6. Schiebetür oder Schwenkschiebetür nach Anspruch 2 und ggf. einem der Ansprüche 3 bis 5, **dadurch gekennzeichnet, dass** zum Durchtritt des ersten und zweiten Gewindebolzens (22.1,22.2) durch die erste Halterungsplatte (19.3) auf einem gemeinsamen Kreisbogen liegende bogenförmige Langlöcher in der ersten Halterungsplatte (19.3) angeordnet sind.

## Claims

1. A sliding or a pivot sliding door for local and longer distance public transport vehicles with at least one door leaf and one drive equipment disposed in the upper region of the door portal, said drive equipment being connected to the door portal through fastening devices and comprising a guiding element on which the door leaf is displaceable in its longitudinal direction, as well as a drive motor the output force of which acts onto the door leaf in the direction of the guiding element, **characterized in that** each fastening device (18.1, 18.2, 18.3, 18.4) for the drive equipment comprises one first holding plate (19.3) solidly connected to the door portal (2) and lying in a plane transverse to the door portal, a second holding plate (20) solidly connected to an element (21) of the drive equipment and lying parallel to said first holding plate (19.3) in the vertical direction, adjustable with respect to the angular adjustment about a horizontal axis, being fastened onto said first holding plate.

2. The sliding or pivot sliding door as set forth in claim 1, **characterized in that** the fixation of the second holding plate (20) on the first holding plate (19.3) comprises the following fastening means:
a) two threaded bolts (22.1, 22.2) lying horizontally and vertically with respect to the plane of the first holding plate (19.3), said threaded bolts each passing through at least one of the two holding plates (19.3, 20) in passageways that either have a larger diameter than the threaded bolt or are configured to be long holes;
b) a third threaded bolt (22.3) lying vertically and parallel to the plane of the first holding plate (19.3) through which two fastening pieces (19.31, 20.1), which are substantially extending horizontally and disposed parallel to each other, one above the other, are connected together, the first of said two fastening pieces (19.31) being solidly connected to the one holding plate (19.3) and traversing the other holding plate (20) in a recess (20.4) and the second being solidly connected to the respective other holding plate (20).

3. The sliding or pivot sliding door as set forth in claim 2, **characterized in that** the recess (20.4) is disposed in the second holding plate (20) and that the first fastening piece (19.31) is connected to the first holding plate (19.3) and traverses the recess (20.4) in the second holding plate (20) and that the second fastening piece (20.1) is fastened to the second holding plate (20) on the side turned away from the first holding plate underneath the recess (20.4) and is disposed underneath the first fastening piece (19.31).

4. The sliding or pivot sliding door as set forth in claim 3, **characterized in that** the through hole in the first fastening piece (19.31) for receiving the third threaded bolt (22.3) has a diameter that is larger than the third threaded bolt (22.3).

5. The sliding or pivot sliding door as set forth in claim 4, **characterized in that** an annular ball socket (24) surrounding the hole and being concave toward the top is disposed on the top side of the first fastening piece (19.31) between said fastening piece and the head or the nut of the third threaded bolt (22.3), an annular spherical washer (23), which surrounds the threaded bolt (22.3) and which is convex toward the bottom, engaging into said ball socket.

6. The sliding or pivot sliding door as set forth in claim 2 and at need in any one of the claims 3 through 5, **characterized in that** the curved long holes lying on an arc of a circle common to both are disposed in the first holding plate (19.3) for the first and the second threaded bolt (22.1, 22.2) to pass through the first holding plate (19.3).

## Revendications

1. Porte coulissante ou porte pivotante-coulissante pour véhicules du trafic voyageurs à courte et à grande distance, comprenant au moins un vantail de porte et un dispositif d'entraînement qui est disposé dans la zone supérieure du portail de porte et qui est relié par l'intermédiaire de dispositifs de fixation au portail de porte et présente un élément de guidage sur lequel ledit vantail de porte est déplaçable dans sa direction longitudinale, ainsi qu'un moteur d'entraînement dont la force motrice s'applique sur le vantail de porte en direction dudit élément de guidage, **caractérisé par le fait que** chaque dispositif de fixation (18.1, 18.2, 18.3, 18.4) pour ledit dispositif d'entraînement présente une première plaque de maintien (19.3) qui est solidarisée au portail de porte (2) et est située dans un plan transversalement au portail de porte et sur laquelle une seconde plaque de maintien (20) qui est solidarisée à un élément (21) du dispositif d'entraînement et située parallèlement à ladite première plaque de maintien (19.3) est fixée de manière à pouvoir être ajustée dans le sens vertical et quant à la position angulaire autour d'un axe horizontal.

2. Porte coulissante ou porte pivotante-coulissante selon la revendication 1, **caractérisée par le fait que** la fixation de ladite seconde plaque de maintien (20) sur la première plaque de maintien (19.3) présente les moyens de fixation suivants :
a) deux boulons filetés (22.1, 22.2) situés horizontalement et perpendiculairement au plan de ladite première plaque de maintien (19.3), qui traversent chacun au moins l'une des deux plaques de maintien (19.3, 20) via des trous de passage qui présentent un diamètre supérieur à celui du boulon fileté ou qui sont réalisés en tant que trous oblongs ;
b) un troisième boulon fileté (22.3) situé verticalement et parallèlement au plan de ladite première plaque de maintien (19.3), par lequel sont reliées entre elles deux pièces de fixation (19.31, 20.1) qui s'étendent pour l'essentiel horizontalement et sont superposées parallèlement l'une à l'autre et dont une première (19.31) est solidarisée à l'une (19.3) des plaques de maintien et traverse l'autre plaque de maintien (20) dans un évidement (20.4), et dont une deuxième est solidarisée à ladite respectivement autre plaque de maintien (20).

3. Porte coulissante ou porte pivotante-coulissante selon la revendication 2, **caractérisée par le fait que** ledit évidement (20.4) est disposé dans ladite seconde plaque de maintien (20) et que la première pièce de fixation (19.31) est reliée à ladite première plaque de maintien (19.3) et passe à travers ledit évidement (20.4) ménagé dans la deuxième plaque de maintien (20) et que ladite deuxième pièce de fixation (20.1) est fixée sur ladite seconde plaque de maintien (20) sur la face montrant dans la direction opposée à la première plaque de maintien, au-dessous de l'évidement (20.4) et est disposée au-dessous de la première pièce de fixation (19.31).

4. Porte coulissante ou porte pivotante-coulissante selon la revendication 3, **caractérisée par le fait que** le trou de passage dans la première pièce de fixation (19.31) destiné à recevoir ledit troisième boulon fileté (22.3) présente un diamètre supérieur à celui du troisième boulon fileté (22.3).

5. Porte coulissante ou porte pivotante-coulissante selon la revendication 4, **caractérisée par le fait que** sur la face supérieure de ladite première pièce de fixation (19.31), entre celle-ci et la tête ou bien l'écrou du troisième boulon fileté (22.3), est disposé un coussinet sphérique (24) annulaire qui entoure le trou et est concave vers le haut et dans lequel s'engage une rondelle sphérique annulaire (23) convexe vers le bas et entourant ledit boulon fileté (22.3).

6. Porte coulissante ou porte pivotante-coulissante selon la revendication 2 et, le cas échéant, selon l'une quelconque des revendications 3 à 5, **caractérisée par le fait que**, pour faire passer les premier et deuxième boulons filetés (22.1, 22.2) à travers ladite première plaque de maintien (19.3), des trous oblongs en arc situés sur un arc de cercle commun sont disposés dans la première plaque de maintien (19.3).
